# EUROPEAN PATENT SPECIFICATION

(11) **EP 1 656 059 B1**
(45) Date of publication and mention of the grant of the patent: **09.04.2008**
(21) Application number: 04733907.2
(22) Date of filing: 19.05.2004
(51) Int. Cl.: A47J 37/04

(54) **DEVICE FOR ROASTING FOOD ON THE SPIT**
BRATSPIESSVORRICHTUNG
DISPOSITIF PERMETTANT DE ROTIR DES ALIMENTS A LA BROCHE

(30) Priority: 20.08.2003 IT RM20030402
(43) Date of publication of application: 17.05.2006
(73) Proprietor: Officine Vitileia Nicolino & C. Snc, 65010 Collecorvino (IT)
(72) Inventor: VITILEIA, Nicolino, I-65010 Collecorvino (IT)
(74) Representative: Sarpi, Maurizio
(86) International application number: PCT/IT2004/000286
(87) International publication number: WO 2005/018396

(56) References cited:
- US-A- 842 749
- US-A- 3 568 590
- US-A- 3 858 495
- US-A- 5 156 083
- US-A- 5 533 440

## Description

The present invention relates to a device for roasting foods on the spit (e.g. sausage, hot dog, etc.), such as disclosed in US 5156083 A, which represents the closest prior art.

Foodstuffs on the spit or roasted foods (also called brochette or kebab)) are well known on the foodstuff market and consists of generally diced foods that are pierced through with sticks of wood, metal or other suitable material. The foodstuffs pierced through with a spit can be meat, fish, cheese, fruit, vegetables and, except for the fruit, can be roasted by different means and hot served.

At present, as it will be disclosed in greater detail, such foods can be roasted by specific apparatus using the heat produced by coal, firewood, electric power or town gas, methane or engine gas.

The most used apparatus are in the form of an open U-shaped channel in which the heat source is placed and the edges of which support the ends of the spits threaded into the foods to be roasted.

Among those most used the following apparatus can be mentioned:
- apparatus using coal and/or firewood (e.g. barbecue);
- apparatus using electric energy;
- apparatus using gas.

In the apparatus of the first type, coal or firewood is placed into the channel, burnt to form live charcoal and when fire glares, the spits are placed side by sides on the upper edges of the U-shaped channel so that food is roasted both by irradiation and flue gases.

In the electrical apparatus, heat and irradiation are produced by electrical resistances located under or above the spits and, in some cases, before and behind if the spits are placed in vertical rows.

At last, in the gas apparatus, heat and irradiation are produced by the combustion of combustible gas by burners, the nozzles of which are disposed under the spits or sometimes before and behind them if the spits are placed over one another in vertical rows.

In all above-mentioned cases, the roasting of food on the spit needs a specific apparatus and its own heat source that requires a considerable power usually greater than 1000 Watt if an electrical power source is used.

A great drawback of such known apparatus is that the fat of the meat melts and drips onto the heat source so that it evaporates producing a large amount of smoke which can be felt evil-smelling or disgusting by many people just because it impregnates clothes and generally all rooms communicating with the kitchen.

For this reason, if the kitchen, or the room in which one of said known apparatus is installed, is not provided with a powerful exhauster, the roasting of the foodstuffs on the spit is usually carried out in the open air.

Foods on spits can also be roasted over a hot plate or an earthenware stone but the organoleptic result is not the best as the melted and sometimes burnt out fat remains on the food and the production of smoke is huge also in this case.

The main object of the present invention is to provide a device or equipment that allows foodstuffs to be roasted on the spit by using heat sources usually available,in the kitchens of houses such as gas-stoves of several size, thus overcoming the above-mentioned problems.

Another object of the invention is to provide an equipment for roasting foods on the spit with poor or no smoke so that it can be used in enclosed spaces without the need for foods to be roasted in the open air. Therefore, it can be used with any weather.

This has been accomplished according to the invention by providing a device comprising essentially a rack supporting a number of spits and provided with means for guiding hot gases to the spits and means only temperately heated by the heat source and able to collect liquids dripping from food without allowing the same to evaporate.

A better understanding of the invention will be more readily apparent from the following detailed description with reference to the accompanying drawings that show by way of a not limited example a preferred embodiment and a variation thereof.

In the drawings:
Figure 1 is an axonometric view of the device;
Figure 2 is a section view of the device of Figure 1 placed on a known domestic stove along a vertical symmetry plane; and
Figure 3 shows a variation of the invention which is particularly suitable for roasting a large amount of foods on the spit at the same time and provides a series of devices like that of Figure 1 disposed on only one stove with a suitable length.

According to a peculiar feature of the invention, when the disclosed apparatus is placed on a gas-stove, an actual fire-place duct is formed with such a shape that all spits placed thereon are hit evenly by the combustion products from such stove which can be of any type, i.e. domestic gas-stove, camping stove or others.

Moreover, in order to avoid dirt and smoke a basin which can be easily removed and washed and able to collect drops dripping from the foods during roasting is placed under the rack.

A second peculiar feature of the invention consists in that such basin is only temperately heated by the heat source so that fat dripping from foods on the spits and falling into the basin is cooled quickly and does not exhale smoke.

To this end a cold chamber is disposed between the basin and the fire-place duct so that the smoke is deviated and the maximum temperature reached by the basin is low enough to prevent fat that drips from foods on the spits from evaporating or sublimating.

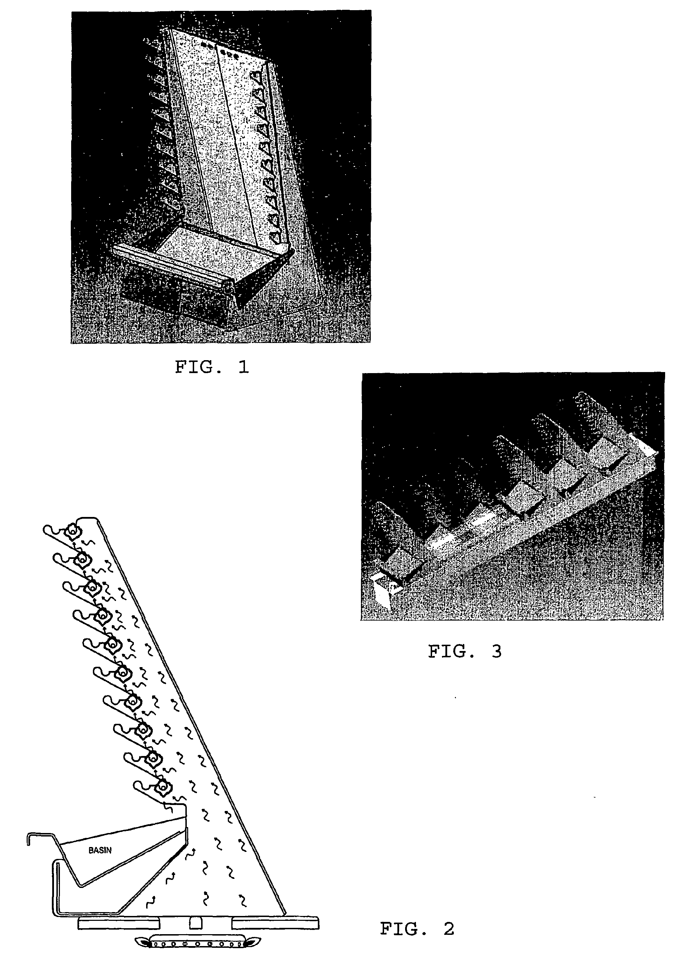

As clearly shown in Figure 2, the base of such fire-place duct is large enough to capture heat and combustion gases exhaled from the stove and is inclined from the vertical to the rack supporting the spits and tapers upwards.

In other words the fire-place duct consists of an inclined duct having an U-shaped cross section opened downwards.

Also the rack is inclined like the fire-place duct so that each spit slightly projects with respect to the underlying spit and all of the spits project with respect to the basin so that drops falling from the food reach the basin without being hit by the hot combustion gases.

According to the invention, most hot combustion gases are given off laterally from the duct hitting the spits disposed on the already disclosed rack during their path to the upper end of the fire-place duct.

Advantageously, each spit is thus hit constantly both from combustion gases leaving laterally the fire-place duct and gases still inside the latter.

In the preferred embodiment disclosed the device is divided vertically into two halves penetrating horizontally into each other so that the width of the rack can be changed to be matched to the length of the foodstuffs (e.g. meat) of the spit.

Moreover, the brackets of the rack have several notches to allow foods to be roasted on spits with different cross size.

In a variation of the invention particularly suitable for little communities and/or restaurants a series of devices of the disclosed type are placed on a gas burner with suitable length and power.

The present invention has been described and illustrated according to a preferred embodiment and a variation thereof, however, it should be understood that those skilled in the art can make technically equivalent modifications and/or replacements without departing from the scope of the present industrial invention.

## Claims

1. A device for roasting foods on the spit, **characterized in that** there are provided in combination: a frontally opened rack supporting a number of spits, means for guiding hot gases to the spite, and means only temperately heated by the heat source and able to collect liquids dripping from food without allowing the same to evaporate; thereby obtaining that, when it is placed on a gas-stove, an actual fire-place duct is formed with such a shape that all spits placed thereon are hit evenly by the combustion products from said stove which can be of any type, i.e. domestic gas-stove, camping stove or others.

2. The device according to any preceding claim, **characterized in that** said collecting means consists of a basin which is placed under the rack so that it can be easily removed and washed and also be able to collect drops dripping from the foods on the spits during roasting.

3. The device according to the preceding claim, **characterized in that** a cold chamber is disposed between the basin and the fire-place duct so that the smoke is deviated and the maximum temperature reached by the basin is low enough to prevent fat that drips from foods on the spits from evaporating or sublimating, so that fat dripping from the foods on the spits and falling into the basin is cooled quickly and is prevented from exhaling smoke.

4. The device according to any claim from 1 on, **characterized in that** the base of such fire-place duct is large enough to capture heat and combustion gases exhaled from the stove and is inclined from the vertical to the rack supporting the spits and tapers upwards, said fire-place duct consisting of an inclined duct having an U-shaped cross section opened downwards,

5. The device according to any claim from 2 on, **characterized in that** the rack is inclined like the fire-place duct so that each spit slightly projects with respect to the underlying spit and all of the spits project with respect to the collecting basin so that drops falling from the food reach the basin without being hit by the hot combustion gases.

6. The device according to any claim from 1 on, **characterized in that** most hot combustion gases are given off laterally from the duct hitting the spits disposed on the rack during their path to the upper end of the fire-place duct, each spit being hit constantly both from combustion gases leaving laterally the fire-place duct and gases still inside the latter.

7. The device according to any preceding claim, **characterized in that** it is divided vertically into two halves penetrating horizontally into each other so that the width of the rack can be changed to be matched to the length of the foodstuffs (e.g. meat) of the spit.

8. The device according to any preceding claim, **characterized in that** the rack is provided with brackets having several notches to allow foods to be roasted on spits with different cross size.

9. A method for roasting foods on the spit for little communities and/or restaurants, **characterized in that** a series of devices of the preceding claims are placed on a gas burner with suitable length and power.

## Patentansprüche

1. Eine Vorrichtung zum Braten von Lebensmitteln auf dem Spieß, **dadurch gekennzeichnet, dass** da in Kombination bereitgestellt sind: eine frontal geöffnetes Gestell, welches eine Anzahl von Spießen stützt, Mittel zum Führen heißer Gase zu den Spießen und Mittel, welche nur gemäßigt durch die Hitzequelle geheizt sind und in der Lage sind, Flüssigkeiten aufzusammeln, welche von den Lebensmitteln tropfen, ohne denselben zu erlauben zu verdampfen; dabei wird erreicht, dass wenn es auf einen Gasherd platziert ist, ein eigentlicher Feuerungsanlagenkanal gebildet ist mit so einer Form, dass alle darauf platzierten Spieße gleichmäßig durch die Verbrennungsprodukte von dem Herd getroffen werden, d.h. häuslicher Gasherd, Campingherd oder andere.

2. Vorrichtung nach irgendeinem vorhergehenden Anspruch, **dadurch gekennzeichnet, dass** die sammelnden Mittel bestehen aus einem Becken, welches unter dem Gestell platziert ist, so dass es einfach entfernt und gewaschen werden kann, und ebenso in der Lage ist Tropfen zu sammeln, welche von den Lebensmittel auf den Spießen während Bratens abtropfen.

3. Vorrichtung nach dem vorhergehenden Anspruch, **dadurch gekennzeichnet, dass** eine kalte Kammer zwischen dem Becken und dem Feuerungsanlagenkanal angeordnet ist, so dass der Rauch abgeleitet wird und die durch das Becken erreichte Maximaltemperatur niedrig genug ist, um Fett, welches von den Lebensmitteln auf den Spießen abtropft, am Verdampfen oder Sublimieren zu hindern, so dass Fett, welches von den Lebensmitteln auf den Spießen abtropft und in das Becken fällt, schnell abkühlt und daran gehindert wird Rauch auszustoßen.

4. Vorrichtung nach irgendeinem der Ansprüche von 1 an, **dadurch gekennzeichnet, dass** die Basis eines solchen Feuerungsanlagenkanals groß genug ist, um Hitze und Verbrennungsgase einzufangen, die von dem Herd ausgestoßen werden, und welche geneigt ist von der Vertikalen zu dem Gestell, welches die Spieße stützt und sich aufwärts zuspitzt, wobei der Feuerungsanlagenkanal besteht aus einem geneigten Kanal mit einem U-förmigen nach unten geöffneten Querschnitt.

5. Vorrichtung nach irgendeinem der Ansprüche von 2 an, **dadurch gekennzeichnet, dass** das Gestell geneigt ist, wie der Feuerungsanlagenkanal, so dass jeder Spieß leicht hervorsteht in Bezug zu dem darunterliegenden Spieß und all die Spieße bezüglich des Sammelbeckens hervorstehen, so dass Tropfen, welche von den Lebensmitteln herabfallen, das Becken erreichen ohne durch die heißen Verbrennungsgase getroffen zu werden.

6. Vorrichtung nach irgendeinem der Ansprüche von 1 an, **dadurch gekennzeichnet, dass** die meisten heißen Verbrennungsgase lateral von dem Kanal abgegeben werden, die die auf dem Gestell angeordneten Spieße treffen während ihrem Weg zu dem oberen Ende des Feuerungsanlagenkanals, wobei jeder Spieß konstant getroffen wird sowohl von Verbrennungsgasen, die den Feuerungsanlagenkanal lateral verlassen, als auch von Gasen, die immer innerhalb des letzteren sind.

7. Vorrichtung nach irgendeinem vorhergehenden Anspruch, **dadurch gekennzeichnet, dass** sie vertikal geteilt ist in zwei Hälften, die sich horizontal durchdringen, so dass die Breite des Gestells geändert werden kann um zu der Länge der Lebensmittel (z.B. Fleisch) des Spießes zu passen.

8. Vorrichtung nach irgendeinem vorhergehenden Anspruch, **dadurch gekennzeichnet, dass** das Gestell ausgestattet ist mit Klammern, welche einige Kerben haben, um Lebensmitteln zu erlauben auf Spießen mit unterschiedlichem Querschnitt gebraten zu werden.

9. Verfahren zum Braten von Lebensmitteln auf dem Spieß für kleine Gemeinschaften und/oder Restaurants, **dadurch gekennzeichnet, dass** eine Serie von Vorrichtungen der vorhergehenden Ansprüche auf einen Gasbrenner mit geeigneter Länge und Leistung platziert werden.

## Revendications

1. Dispositif permettant de faire rôtir des aliments à la broche, **caractérisé par** la prévision en combinaison : d'une grille supportant un certain nombre de broches, des moyens pour guider les gaz chauds vers les broches, et des moyens chauffés uniquement modérément par la source de chaleur et pouvant collecter des liquides qui s'égouttent de l'aliment sans permettre à ces derniers de s'évaporer ; avec, en conséquence, lorsque l'on le place sur une cuisinière à gaz, la formation d'un véritable conduit de cheminée avec une forme telle que toutes les broches placées sur celui-ci sont heurtées régulièrement par les produits de combustion provenant de ladite cuisinière qui peut être de n'importe quel type, c'est-à-dire une cuisinière à gaz domestique, un réchaud à gaz de camping ou autres.

2. Dispositif selon l'une quelconque des revendications précédentes, **caractérisé en ce que** lesdits moyens de collecte se composent d'un bac qui est placé sous la grille de sorte qu'il peut être retiré et lavé facilement et également peut collecter les gouttes qui s'égouttent des aliments sur les broches, pendant le rôtissage.

3. Dispositif selon les revendications précédentes, **caractérisé en ce qu'**une chambre froide est disposée entre le bac et le conduit de cheminée de sorte que la fumée est déviée et que la température maximum atteinte par le bac est assez basse pour empêcher la graisse qui s'égoutte des aliments sur les broches, de s'évaporer ou d'être sublimée, de sorte que la graisse qui s'égoutte des aliments sur les broches et qui tombe dans le bac est refroidie rapidement et est empêchée d'exhaler la fumée.

4. Dispositif selon l'une quelconque des revendications à partir de la revendication 1, **caractérisé en ce que** la base d'un tel conduit de cheminée est assez grande pour capturer les gaz chauds et de combustion exhalés depuis la cuisinière et est inclinée à partir de la verticale jusqu'à la grille supportant les broches et se rétrécie progressivement, ledit conduit de cheminée se composant d'un conduit incliné ayant une section transversale en forme de U ouverte vers le bas.

5. Dispositif selon l'une quelconque des revendications à partir de la revendication 2, **caractérisé en ce que** la grille est inclinée comme le conduit de cheminée de sorte que chaque broche fait légèrement saillie par rapport à la broche sous-jacente et toutes les broches font saillie par rapport au bac de collecte de sorte que les gouttes qui tombent de l'aliment atteignent le bac sans être heurtées par les gaz de combustion chauds.

6. Dispositif selon l'une quelconque des revendications à partir de la revendication 1, **caractérisé en ce que** la plupart des gaz de combustion chauds sont retirés latéralement du conduit heurtant les broches disposées sur la grille pendant leur passage vers l'extrémité supérieure du conduit de cheminée, chaque broche étant heurtée constamment à la fois par les gaz de combustion quittant latéralement le conduit de cheminée et les gaz encore à l'intérieur de ce dernier.

7. Dispositif selon l'une quelconque des revendications précédentes, **caractérisé en ce qu'**il est divisé verticalement en deux moitiés pénétrant horizontalement l'une dans l'autre de sorte que la largeur de la grille peut être modifiée pour correspondre à la longueur des aliments (par exemple de la viande) de la broche.

8. Dispositif selon l'une quelconque des revendications précédentes, **caractérisé en ce que** la grille est prévue avec des supports ayant plusieurs encoches pour permettre de faire rôtir les aliments sur des broches avec une taille transversale différente.

9. Procédé pour faire rôtir des aliments sur une broche pour de petites communautés et/ou restaurants, **caractérisé en ce qu'**une série de dispositifs selon les revendications précédentes est placée sur un brûleur à gaz avec la longueur et la puissance appropriées.
